(19) Europäisches Patentamt
European Patent Office
Office européen des brevets

(11) Publication number: 0 354 516 B1

(12) # EUROPEAN PATENT SPECIFICATION

(45) Date of publication of patent specification: **27.04.94**

(51) Int. Cl.⁵: **C08L 97/02**

(21) Application number: **89114566.6**

(22) Date of filing: **07.08.89**

The file contains technical information submitted after the application was filed and not included in this specification

(54) **Binder compositions for lignocellulosic composites and process for the preparation thereof.**

(30) Priority: **08.08.88 IT 2168288**

(43) Date of publication of application: **14.02.90 Bulletin 90/07**

(45) Publication of the grant of the patent: **27.04.94 Bulletin 94/17**

(84) Designated Contracting States: **BE CH DE ES FR GB LI NL SE**

(56) References cited:
**GB-A- 2 090 261**

**PATENT ABSTRACTS OF JAPAN, vol. 10, no. 131 (C-346)[2188], 15th May 1986; & JP-A-60 258 221**

**CHEMICAL ABSTRACTS, vol. 93, no. 26, 29th December 1980, page 57, abstract no. 240715a, Columbus, Ohio, US; K. TAKI et al.: "Effect of diisocyanate additive to emulsion adhesives"**

(73) Proprietor: **MINISTERO DELL' UNIVERSITA' E DELLA RICERCA SCIENTIFICA E TECNOLOGICA**
**76, Lungotevere Thaon di Revel**
**I-00196 Roma(IT)**

(72) Inventor: **Lepori, Agostino Chem. Eng.**
**22, via Legnano**
**I-21054 Fagnano Olona Varese(IT)**
Inventor: **Zavatteri, Ignazio, Dr.-Chem.**
**3A, via Monterosso**
**I-21010 Cardano al Campo Varese(IT)**
Inventor: **Cova, Mario, Chem. Eng.**
**3, via Monte Grappa**
**I-21053 Castellanza Varese(IT)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 354 516 B1

Rank Xerox (UK) Business Services
(3.10/3.09/3.3.3)

**CHEMICAL ABSTRACTS**, vol. 91, no. 22, 26th November 1979, page 81, abstract no. 176846y, Columbus, Ohio, US; F. NAKAMURA et al.: "Gluing of high moisture content lumber"

**CHEMICAL ABSTRACTS**, vol. 83, no. 18, 3rd November 1975, page 57, abstract no. 148457p, Columbus, Ohio, US; & JP-A-75 69 142

## Description

The present invention relates to binder compositions for lignocellulosic composites and to a process for the preparation thereof.

More particularly, the present invention relates to polyisocyanate-based binder compositions for lignocellulosic composites, to the process for the preparation thereof and to the use of said compositions for the manufacture of chipped panels or similar products.

JP-A-60-258221 (Patent Abstracts of Japan, vol. 10, no. 131 (C-346) [2188] (1986)) discloses a molded chaff article obtained by kneading chaff with a mixture of a polyisocyanate compound and an ethylene-vinyl acetate based copolymer, molding the resultant mixture and heat-treating the molded article.

The term "polyisocyanates" as used in the present description and the appended claims is intended to denote organic compounds of low, medium and/or high molecular weight containing at least two -NCO groups.

Examples of low molecular weight polyisocyanates are those of the general formula:

OCN - R - NCO (I)

wherein R represents an alkylene, cycloalkylene, arylene or alkylarylene radical containing from 1 to 25 carbon atoms. Preferred radicals R are alkylene radicals having 1 to 12 carbon atoms, cycloalkylene radicals having 5 to 18 carbon atoms, arylene radicals having 6 to 18 carbon atoms and alkylarylene radicals having 7 to 18 carbon atoms. Examples of compounds of formula (I) include meta and/or para-phenylene diisocyanate, 2,4-toluene diisocyanate, alone or in combination with the isomeric 2,6-toluene diisocyanate, 4,4'-diphenylmethane diisocyanate, hexamethylene diisocyanate, 4,4'-dicyclohexylmethane diisocyanate, 1-isocyanato-6-isocyanatomethyl-3,5,5-trimethylcyclohexane (or isophorondiisocyanate) and 2,2,4-trimethylhexamethylene diisocyanate, optionally as mixture with the isomeric 2,4,4-trimethylhexamethylene diisocyanate.

Examples of medium or high molecular weight polyisocyanates are those having a different degree of condensation which can be obtained by, e.g.,phosgenation of aniline-formaldehyde condensates. These products consist of mixtures of polymethylene-polyphenylene-isocyanates having the general formula:

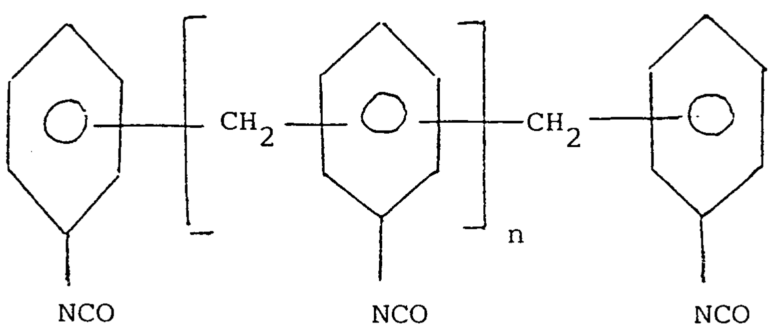

wherein n represents an integer higher than or equal to 1.

Particularly preferred polyisocyanates are mixtures of polymethylene-polyphenylene-isocyanates having an average functionality of from 2.6 to 2.8. These products are sold under trade names such as "Tedimon ® 31" (Montedipe), "PaPi ®" (Upjohn) or "Mondur ® MR" (Mobay).

It is known to use polyisocyanates, preferably in the form of aqueous emulsions, as binders for composites based on lignocellulosic materials, e.g. wood, bark, bagasse, straw, bamboo and rice chaff, in the form of granules, chips, fibers or meals, as described in EP-A-13 112 as well as in IT-A-20027 A/88.

It is also known that polyisocyanates exert a cohesive action only when the molding of the composite is carried out at high temperatures, e.g. in the range of from 150 to 200 °C. Consequently, when such binders are used the green tack cohesion of the mattress, that is the vibration- and shifting-tightness of the layers of resinated materials which are disposed on the bearing element and are cold prepressed at 20-30 °C is practically zero, which results in apparent processaability limitations.

Particularly in high-speed and/or multi-space plants there are encountered significant drawbacks, including even the impossibility of continuing the processing, as reported in "Holz als Roh- und Werkstoff" 1977, 35(8), 295-299 and 1985, 43(10), 423-427, and in Wilhelm-Klauditz Institut Bericht No.14, "Diisocyanat und Polyurethanklebstoffe für Holz und Holzwerkstoffe", Braunschweig (Federal Republic of Germany),

March 1986.

Therefore, the availability of polyisocyanate binder compositions for lignocellulosic composites which are capable of giving rise to green tack cohesion appears very valuable and highly interesting from an industrial point of view.

However, results obtained so far in this field have been completely unsatisfactory even when products (e.g. resorcinol resins) giving good results in combination with adhesive products (e.g. amino adhesives) having a chemical structure different from isocyanates were used.

H.J. Deppe and K. Ernst have reported on this matter in "Holz als Roh- und Werkstoff", 1977, 35(8), 295-299.

It has now been found that a satisfactory green tack cohesion level of polyisocyanate binder compositions, to be used for the manufacture of chipped panels or similar manufactured articles, can be achieved when water-dispersed acetovinylic (vinylacetate) resins having a suitable plasticity are used as additives.

Therefore, object of the present invention are binder compositions for lignocellulosic composites, comprising an aqueous emulsion containing at least one polyisocyanate and at least one water-dispersed vinyl acetate resin having a glass transition temperature (Tg) below 5 °C. Vinyl acetate resins having a glass transition temperature of from -15 to 0 °C and a minimum film forming temperature of about 0 °C are particularly preferred.

Examples of vinylacetate resins suitable for use in the binder compositions of the present invention are the "soft" vinyl acetate copolymers obtained by copolymerizing vinyl acetate with flexibilizing monomers, optionally combined with hardening monomers.

Examples of flexibilizing monomers include (preferably $C_{2-8}$-) olefins such as ethylene; high molecular weight acrylic and methacrylic monomers, e.g. $C_{4-20}$ alkyl (meth)acrylates (or oxygen equivalents thereof) such as 2-ethylhexyl acrylate, n- or i-butylacrylate, lauryl acrylate, stearyl acrylate, methoxy methylacrylate, methoxyethyl acrylate and ethoxymethyl methacrylate; esters (e.g. $C_{1-12}$ alkyl esters) of unsaturated (preferably $C_{2-6}$-) diacids, such as dibutyl maleate and diisobutyl maleate; and esters of linear or branched fatty acids and vinyl alcohol, such as vinyl versatate, vinyl laurate, vinyl octoate, vinyl caprate and vinyl stearate,

Examples of suitable hardening monomers are vinyl halides, such as vinyl chloride, vinyl bromides and vinyl fluoride; low molecular weight (meth)acrylic esters, e.g. $C_{1-3}$ alkyl esters, such as methyl methacrylate and ethyl methacrylate; and nitriles, such as acrylonitrile and methacrylonitrile.

The flexibilizing monomers, optionally combined with the hardening monomers, can generally be used in an amount of up to 70% by weight, based on the vinylacetate resin, and preferably of from 10 to 60%. The hardening monomers, when present, are used in amounts such as to keep the Tg of the vinyl acetate resin below 5 °C.

Further examples of vinyl acetate resins useable in the binder compositions of the present invention are vinyl acetate homopolymers plasticized with external additives in a quantity of from 5 to 50% by weight of the dry homopolymer.

Examples of the above additives (plasticizers) include organic phthalates, such as n- or i-dibutylphthalate and butylbenzylphthalate; organic phosphates, such as tricresylphosphate; phthalylglycolates, such as phthalylbutylglycolate; and polyesters.

More generally, all the products listed in the "Encyclopedia of Chemical Technology", edited by Interscience Publishers (J. Wiley and Sons Inc., second edition (1968), page 775 and page 778) can be used.

The aqueous emulsions of the binder compositions of the present invention preferably contain a quantity of dry matter of from 10 to 80% by weight. Even more preferred, these emulsions contain from 2 to 20% by weight, particularly from 5 to 10% by weight, of vinyl acetate resin and from 8 to 60% by weight, particularly from 35 to 50%, of polyisocyanate.

The binder compositions of the present invention may be obtained by dispersing, under stirring, at least one polyisocyanate as such (that is without modifications in order to make the preparation of the emulsion easier) in a diluted aqueous vinylacetate resin dispersion.

Examples of suitable vinyl acetate resin dispersions are those available on the market and known as e.g. Vinavil ® (Vinavil® EVA 201, Vinavil ® EVA 479, Vinavil ® MV 50 and Vinavil ® SL sold by Montedipe, Vinnapas ® (Wacker) and Mowilith ® (Hoechst).

The vinyl acetate resin dispersion preferably is diluted so as to afford an amount of resin of from 1 to 15%, based on the dry lignocellulosic material.

The polyisocyanate may be added to the vinyl acetate resin dispersion within a short time, for instance within 5 to 60 seconds, and with high stirrer speeds, for instance higher than 8000 rpm, achievable by means of e.g. turboagitators.

Alternatively, the binder compositions of the present invention can be obtained with relatively low stirrer speeds, for instance between 1000 and 2000 rpm, by using stabilizers for the polyisocyanate, such as cellulose esters, e.g. carboxymethylcellulose, preferably used in quantities of from 0.1 to 5% by weight, based on the total weight of the emulsion, and added to the vinyl acetate resin dispersion before the polyisocyanate.

The compositions of the present invention can be advantageously used as binders for cellulose materials, preferably lignocellulosic materials, such as wood, bark, bagasse, straw, bamboo and rice chaff; in the form of granules, chips, fibers or meals, and more generally for the manufacture of chipped panels or other composites, such as plywood, masonite and laminated boards without any problem for the industrial operator.

Preferably, these compositions are added to the lignocellulosic material in quantities of from 2 to 50% by weight (based on the chips), particularly of from 5 to 20%. They allow to obtain green tack cohesion values of the resinated material higher than 1 kg, generally of from 2.0 to 3.5 kg.

For the determination of the green tack cohesion, pellets of 50 mm diameter were formed by using 30 g of the resinated material (for instance wood chips) and by applying a load of 500 kg for 30 seconds. Thereafter the resulting pellets were subjected to a break test on a dynamometer, thereby determining the load necessary for breaking.

It has also been found that it is possible to obtain satisfactory green tack values by preparing the compositions of the present invention in situ. This can be achieved by separately spraying onto the cellulosic material a polyisocyanate emulsion, such as the ones described in EP-A-13 112, and a vinyl acetate resin dispersion, e.g. of the type available on the market, diluted to about 40% of the dry matter, or by applying (spraying) the two pre-mixed emulsions together. In this case also the quantities of the vinyl acetate resin dispersion necessary to provide the cellulosic material with satisfactory green tack cohesion values are relatively small and are usually in the range of from 1 to 15% of dry resin, based on the resinated material.

The following examples are given in order to illustrate the present invention without, however, limiting it.

## EXAMPLE 1

a) 72 g of Vinavil ® EVA 201 (dry matter 56%) of Montedipe S.p.A. were added to 408 g of deionized water.
Thereafter, 320 g of polymethylene-polyphenylene-isocyanate (Tedimon ® 31 of Montedipe S.p.A.) were added under agitation at high velocity (10000 rpm), using a turboagitator type Ultra Turrax ® T 50 equipped with emulsifying head T 45 N (manufactured by Janke Kunkel GmbH).
600 g of the resulting emulsion were used to resinate 3000 g of wood chips (of the type industrially used for external chipped panels).

b) To 72 g of Vinavil ® EVA 201 in 288 g of deionized water 240 g of Tedimon ® 31 were added according to the procedure described above.
450 g of the resulting emulsion were used to resinate 3000 g of wood chips (of the type industrially used for the inner layers of chipped panels).

c) A layer of 700 g of resinated chips described under (b) and a layer of 700 g of resinated chips described under (a) were placed on a 0.25 $m^2$ plate. The resulting mattress was molded at 175 °C for 4 minutes to obtain a 16 mm panel V100 (DIN 68763) (crude), showing the characteristics reported in the following table, which also indicates the green tack cohesion of the resinated chips.

## EXAMPLE 2

a) 600 g of a 1.18% aqueous solution of carboxymethylcellulose (degree of substitution 0.82, Hoeppler viscosity of a 2% aqueous solution measured at 20 °C of 100 mPa.s and pH = 6.4) were added, under agitation, to 400 g of polymethylene-polyphenylene-isocyanate (Tedimon ® 31).
The dispersion thus obtained was stirred at high speed for at most 30 seconds.

b) 600 g of the resulting polyisocyanate emulsion were added, under mild agitation, to 75 g of Vinavil ® EVA 201, diluted to 40%, and thereafter the obtained mixture was used to resinate 3000 g of wood chips of the type industrially used for the external layers of chipped panels.

c) To 450 g of the polyisocyanate emulsion described under (a) 75 g of Vinavil ® EVA 201, diluted to 40%, were added. Thereafter, the resulting mixture was used to resinate 3000 g of wood chips of the type industrially used for the inner layers of chipped panels.

d) A panel was prepared and molded by following the procedure of Example 1.
A panel V100 was obtained; the characteristics of said panel and the green tack cohesion value of the resinated chips are reported in the following table.

EXAMPLE 3

The procedure of example 2 was followed, except that wood chips were resinated by applying the two emulsions (i.e. the polyisocyanate emulsion and the vinyl acetate resin emulsion) separately.
A panel V100 was obtained; its characteristics, together with the green tack cohesion value of the resinated chips, are reported in the following table.

EXAMPLE 4 (comparative)

The procedure of example 3 was followed, except that only the polyisocyanate emulsion was introduced into the resinating machine, without using the vinyl acetate resin emulsion. A panel V100 was obtained; its characteristics, together with the green tack cohesion value of the resinated chips, are reported in the following table.

EXAMPLE 5

a) 380 g of deionized water were added to 100 g of Vinavil ® MV50 (dry matter 59.5%) of Montedipe S.p.A. Thereafter, 320 g of Tedimon ® 31 were added and the wood chips for the external layers of a panel were resinated as described under (a) of example 1.
b) To 260 g of deionized water 100 g of Vinavil ® MV50 were added, followed by 240 g of Tedimon ® 31, and thereafter the wood chips for the inner layer of a panel were resinated as described under (b) of example 1.
c) The panel was prepared and molded as described in example 1.
A panel V100 was obtained; its characteristics, together with the green tack cohesion value of the resinated chips, are reported in the following table.

EXAMPLE 6

a) 78 g of Vinavil ® EVA 479 (dry matter 51%) of Montedipe S.p.A. were added to 402 g of deionized water, followed by 320 g of Tedimon ® 31. Then the wood chips for the external layers of a panel were resinated as described under (a) of example 1.
b) 78 g of Vinavil ® EVA 479 of Montedipe S.p.A. were added to 282 g of deionized water and the wood chips for the inner layer of a panel were resinated as described under (b) of example 1.
c) A panel was prepared and molded by working as in example 1. A panel V100 was obtained; its characteristics are reported in the following table.

EXAMPLE 7

a) To 402 g of a 0.6% aqueous solution of carboxymethylcellulose (Tylose ® C30 sold by Hoechst) there were added 78 g of Vinavil ® EVA 201, followed by the addition of 320 g of Tedimon ® 31 within 2 to 4 minutes, under medium speed agitation (2000-3000 rpm). Finally the wood chips for the external layer of a panel were resinated as described under (a) of example 1.
b) To 282 g of a 0.6% aqueous solution of Tylose ® C30 there were added 78 g of Vinavil ® EVA 201, followed by the addition of Tedimon ® 31 as described above. Thereupon the wood chips for the inner layer of a panel were resinated as described under (b) of example 1.
c) A panel V100 was prepared and molded by working as in example 1.
A panel V100 was obtained; its characteristics are reported in the following table.

TABLE

| | | EXAMPLE | | | | | | |
|---|---|---|---|---|---|---|---|---|
| | | 1 | 2 | 3 | 4 | 5 | 6 | 7 |
| Green tack cohesion of the resinated chips | kg | 2.5 | 2.5 | 3 | 0 | 2 | 2.5 | 2.5 |
| Characteristics of the panels | | | | | | | | |
| -Thickness (after smoothing) | mm | 14.7 | 15.3 | 14.7 | 15.3 | 14.6 | 14.1 | 14.1 |
| -Volumetric mass | $kg/m^3$ | 645 | 683 | 650 | 668 | 649 | 660 | 665 |
| - Resistance to tensile stress V100 | $N/mm^2$ | 0.30 | 0.48 | 0.37 | 0.36 | 0.29 | 0.51 | 0.41 |
| -Resistance to bending stress | $N/mm^2$ | 18.0 | 20.8 | 18.1 | 19.5 | 18.6 | 18.0 | 18.5 |
| -Softening | % | 10.6 | 8.1 | 9.2 | 8.8 | 9.1 | 8.2 | 9.1 |
| -Water content | % | 6.1 | 7.8 | 7.4 | 7.2 | 7.9 | 8.6 | 8.1 |

Remark: for the determination of the green tack cohesion, there were prepared pellets of 50 mm diameter, using 30 g of resinated chips and applying a load of 500 kg for 30 seconds.

The pellets were then subjected to a break test on a dynamometer, measuring the load necessary for breaking.

## Claims

1. Binder compositions for lignocellulosic composites, comprising an aqueous emulsion containing at least one polyisocyanate and at least one water-dispersed vinyl acetate resin having a glass transition temperature of less than 5 °C.

2. Composition according to claim 1, wherein the vinyl acetate resin has a glass transition temperature of from -15 °C to 0 °C and a minimum film forming temperature of 0 °C.

**3.** Compositions according to any one of claims 1 or 2, wherein the vinyl acetate resin is obtained by copolymerizing vinyl acetate with flexibilizing monomers and, optionally, with hardening monomers.

**4.** Compositions according to claim 3, wherein said flexibilizing monomers are selected form olefins, high molecular weight acrylic and methacrylic monomers, esters of unsaturated diacids, and esters of linear or branched fatty acids and vinyl alcohol and/or said hardening monomers are selected from vinyl halides, low molecular weight methacrylic esters and nitriles.

**5.** Compositions according to any one of claims 3 and 4, wherein the flexibilizing monomers, optionally combined with the hardening monomers, are used in an amount of up to 70% by weight, based on the vinyl acetate resin.

**6.** Compositions according to claim 5, wherein the flexibilizing monomers are used in an amount of from 10 to 60% by weight.

**7.** Compositions according to any one of claims 1 and 2, wherein the vinyl acetate resins are vinyl acetate homopolymers plastified with additives in an amount of from 5 to 50% by weight, based on the dry homopolymer.

**8.** Compositions according to claim 7, wherein said additives are selected from organic phthalates, organic phosphates and polyesters.

**9.** Compositions according to any one of the preceding claims, wherein the aqueous emulsion has a dry matter content of from 10 to 80% by weight.

**10.** Compositions according to claim 9, wherein said emulsion contains from 2 to 20% by weight of vinyl acetate resin and from 8 to 60% by weight of polyisocyanate.

**11.** Compositions according to claim 10, wherein said emulsion contains from 5 to 10% by weight of vinylacetate resin and from 35 to 50% by weight of polyisocyanate.

**12.** Process for the preparation of the binder compositions according to any of the preceding claims, comprising the dispersion, under stirring, of at least one polyisocyanate in a diluted dispersion of vinyl acetate resin.

**13.** Process according to claim 12, wherein the vinyl acetate resin dispersion contains from 0.1 to 5% by weight, based on the total emulsion, of stabilizers for the polyisocyanate.

**14.** Process according to claim 13, wherein said stabilizers are selected from cellulose esters.

**15.** Use of the compositions according to any one of claims 1 to 11 as binders for cellulose materials.

**16.** Use according to claim 15, wherein said cellulose materials are lignocellulosic materials such as wood, bark, bagasse, straw, bamboo and rice chaff, in the form of granules, chips, fibers or meals.

**17.** Use of the compositions according to any one of claims 1 to 11 for the manufacture of chipped panels or other composites, such as plywood, masonite and laminar boards.

**18.** Use according to any one of claims 15 to 17, wherein the binder composition is used in an amount of from 2 to 50% by weight (based on the chips) and with green tack cohesion values of the resinated material higher than 1 kg, the binder composition optionally being prepared in situ on the lignocellulosic material.

**19.** Use according to claim 18, wherein the binder composition is used in an amount of from 5 to 20% by weight and/or with green tack cohesion values of the resinated material of from 2.0 to 3.5 kg.

**20.** Use according to any one of claims 16 to 19, wherein the amount of vinyl acetate resin is from 1 to 15% by weight, based on the dry lignocellulosic material.

**Patentansprüche**

1. Bindemittel-Zusammensetzungen für Lignocellulose-Verbundmaterialien, umfassend eine wäßrige Emulsion, die mindestens ein Polyisocyanat und mindestens ein in Wasser dispergiertes Vinylacetatharz mit einer Glasübergangstemperatur von weniger als 5 °C enthält.

2. Zusammensetzung nach Anspruch 1, in welcher das Vinylacetatharz eine Glasübergangstemperatur von -15 °C bis 0 °C und eine minimale Filmbildungstemperatur von 0 °C aufweist.

3. Zusammensetzungen nach irgendeinem der Ansprüche 1 oder 2, in welchen das Vinylacetatharz durch Copolymerisation von Vinylacetat mit flexibel machenden Monomeren und gegebenenefalls mit hart machenden Monomeren erhalten wird.

4. Zusammensetzungen nach Anspruch 3, in welchen die flexibel machenden Monomeren ausgewählt sind aus Olefinen, Acryl- und Methacryl-Monomeren mit hohem Molekulargewicht, Estern von ungesättigten Disäuren und Estern von linearen oder verzweigten Fettsäuren und Vinylalkohol und/oder die hart machenden Monomeren ausgewählt sind aus Vinylhalogeniden, Methacrylestern mit niedrigem Molekulargewicht und Nitrilen.

5. Zusammensetzungen nach irgendeinem der Ansprüche 3 und 4, in welchen die flexibel machenden Monomeren, gegebenenfalls kombiniert mit den hart machenden Monomeren, in einer Menge von bis zu 70 Gewichtsprozent, bezogen auf das Vinylacetatharz, eingesetzt werden.

6. Zusammensetzungen nach Anspruch 5, in welchen die flexibel machenden Monomeren in einer Menge von 10 bis 60 Gewichtsprozent verwendet werden.

7. Zusammensetzungen nach irgendeinem der Ansprüche 1 und 2, in welchen die Vinylacetatharze Vinylacetathomopolymere sind, die mit Additiven in einer Menge von 5 bis 50 Gewichtsprozent, bezogen auf das trockene Homopolymer, weichgemacht wurden.

8. Zusammensetzungen nach Anspruch 7, in welchen die Additive aus organischen Phthalaten, organischen Phosphaten und Polyestern ausgewählt sind.

9. Zusammensetzungen nach irgendeinem der vorangehenden Ansprüche, in welchen die wäßrige Emulsion einen Gehalt an Trockensubstanz von 10 bis 80 Gewichtsprozent aufweist.

10. Zusammensetzungen nach Anspruch 9, in welchen die Emulsion 2 bis 20 Gewichtsprozent Vinylacetatharz und 8 bis 60 Gewichtsprozent Polyisocyanat enthält.

11. Zusammensetzungen nach Anspruch 10, in welchen die Emulsion 5 bis 10 Gewichtsprozent Vinylacetatharz und 35 bis 50 Gewichtsprozent Polyisocyanat enthält.

12. Verfahren zur Herstellung der Bindemittel-Zusammensetzungen nach irgendeinem der vorangehenden Ansprüche, umfassend die Dispergierung, unter Rühren, von mindestens einem Polyisocyanat in einer verdünnten Vinylacetatharz-Dispersion.

13. Verfahren nach Anspruch 12, in welchem die Vinylacetatharz-Dispersion 0,1 bis 5 Gewichtsprozent, bezogen auf die Gesamtemulsion, Stabilisatoren für das Polyisocyanat enthält.

14. Verfahren nach Anspruch 13, in welchem die Stabilisatoren aus Celluloseestern ausgewählt sind.

15. Verwendung der Zusammensetzungen nach irgendeinem der Ansprüche 1 bis 11 als Bindemittel für Cellulosematerialien.

16. Verwendung nach Anspruch 15, worin die Cellulosematerialien Lignocellulose-Materialien, wie zum Beispiel Holz, Rinde, Bagasse, Stroh, Bambus und Reishächsel, in Form von Körnchen, Schnitzeln, Fasern oder Mehlen, sind.

17. Verwendung der Zusammensetzungen nach irgendeinem der Ansprüche 1 bis 11 für die Herstellung von Spanplatten oder anderen Verbundmaterialien, wie zum Beispiel Schichtholz, Holzfaserplatten und Verbundplatten.

18. Verwendung nach irgendeinem der Ansprüche 15 bis 17, worin die Bindemittel-Zusammensetzung in einer Menge von 2 bis 50 Gewichtsprozent (bezogen auf die Schnitzel) und mit Grün-Zugfestigkeits-Kohäsionswerten des mit Harz versehenen Materials von höher als 1 kg verwendet wird, wobei die Bindemittel-Zusammensetzung gegebenenfalls in situ auf dem Lignocellulose-Material hergestellt wird.

19. Verwendung nach Anspruch 18, worin die Bindemittel-Zusammensetzung in einer Menge von 5 bis 20 Gewichtsprozent und/oder mit Grün-Zugfestigkeits-Kohäsionswerten des mit Harz versehenen Materials von 2,0 bis 3,5 kg verwendet wird.

20. Verwendung nach irgendeinem der Ansprüche 16 bis 19, worin die Menge an Vinylacetatharz 1 bis 15 Gewichtsprozent, bezogen auf das trockene Lignocellulose-Material, beträgt.

## Revendications

1. Des compositions de liants pour composites lignocellulosiques, comprenant une émulsion aqueuse contenant au moins un polyisocyanate et au moins une résine d'acétate de vinyle dispersée dans l'eau, présentant une température de transition vitreuse inférieure à 5 ° C.

2. Une composition selon la revendication 1, caractérisée en ce que la résine d'acétate de vinyle présente une température de transition vitreuse de -15 ° C à 0 ° C, et une température de formation de film minimale de 0 ° C.

3. Compositions selon l'une quelconque des revendications 1 ou 2, caractérisées en ce que la résine d'acétate de vinyle est obtenue par copolymérisation d'acétate de vinyle avec des monomères élastifiants et éventuellement avec des monomères durcissants.

4. Compositions selon la revendication 3, caractérisées en ce que lesdits monomères élastifiants sont sélectionnés parmi oléfines, monomères méthacryliques et acryliques de poids moléculaire élevé, esters de diacides insaturés, et esters d'acides gras linéaires ou ramifiés et d'alcools vinyliques et/ou lesdits monomères durcissants sont sélectionnés parmi halogénures de vinyle, nitriles et esters méthacryliques de faible poids moléculaire.

5. Compositions selon l'une quelconque des revendications 3 et 4, caractérisées en ce que les monomères élastifiants, éventuellement combinés avec les monomères durcissants, sont utilisés en une quantité pouvant atteindre 70% en poids par rapport au poids de la résine d'acétate de vinyle.

6. Compositions selon la revendication 5, caractérisées en ce que les monomères élastifiants sont utilisés en une quantité de 10 à 60% en poids.

7. Composition selon l'une quelconque des revendications 1 et 2, caractérisées en ce que les résines d'acétate de vinyle sont des homopolymères d'acétate de vinyle plastifiés avec des additifs en une quantité de 5 à 50% en poids par rapport au poids secs de l'homopolymère.

8. Compositions selon la revendication 7, caractérisées en ce que lesdits additifs sont sélectionnés parmi les polyesters, les phosphates organiques et les phthalates organiques.

9. Compositions selon l'une quelconque des revendications précédentes, caractérisées en que l'émulsion aqueuse présente une teneur en matière sèche de 10 à 80% en poids.

10. Compositions selon la revendication 9, caractérisées en ce que ladite émulsion contient de 2 à 20% en poids de résine d'acétate de vinyle et de 8à 60% en poids de polyisocyanate.

11. Compositions selon la revendication 10, caractérisées en ce que ladite émulsion contient de 5 à 10% en poids de résine d'acétate de vinyle et de 35 à 50% en poids de polyisocyanate.

12. Procédé de préparation de compositions de liant selon l'une quelconque des revendications précédentes, comprenant la dispersion sous agitation d'au moins un polyisocyanate dans une dispersion diluée d'une résine d'acétate de vinyle.

13. Procédé selon la revendication 12, caractérisé en ce que la dispersion de la résine d'acétate de vinyle contient de 0,1 à 5% en poids par rapport au poids total de l'émulsion d'agents stabilisants le polyisocyanate.

14. Procédé selon la revendication 13, caractérisé en ce que lesdits agents stabilisants sont sélectionnés parmi les esters de cellulose.

15. Utilisation des compositions selon l'une quelconque des revendications 1 à 11 en tant que liants pour les matériaux cellulosiques.

16. Utilisation selon la revendication 15 caractérisée en ce que lesdits matériaux cellulosiques sont des matériaux lignocellulosiques tels que le bois, l'écorce, la bagasse, la paille, le bambou et la paille de riz sous forme de granulés, de copeaux, de fibres ou de farine.

17. Utilisation des compositions selon l'une quelconque des revendications 1 à 11, pour la préparation de panneaux d'agglomérés ou d'autres composites tels que des panneaux lamellaires de contreplaqué et de masonite.

18. Utilisation selon l'une quelconque des revendications 15 à 17, caractérisée en ce que la composition de liant est utilisée en une quantité de 2 à 50% en poids (par rapport au poids des copeaux) et avec des valeurs de cohésion à l'état collant sec du matériau résiné supérieur à 1 kg, la composition de liant étant éventuellement préparée in situ, sur le matériau ligno-cellulosique.

19. Utilisation selon la revendication 18, caractérisée en ce que la composition de liant est utilisée en une quantité de 5 à 20% en poids et/ou avec des valeurs de cohésion à l'état collant à sec du matériau résiné de 2,0 à 3,5 kg.

20. Utilisation selon l'une quelconque des revendications 16 à 19, caractérisée en ce que la quantité de résine d'acétate de vinyle est de 1 à 15% en poids par rapport au poids sec du matériau lignocellulosique.